# EUROPEAN PATENT APPLICATION

(11) **EP 4 582 317 A1**
(43) Date of publication of application: **09.07.2025**
(21) Application number: 23860470.6
(22) Date of filing: 31.08.2023
(51) Int. Cl.: B60S 1/56

(54) **CLEANING DEVICE**

(30) Priority: 31.08.2022 JP 2022137957
(71) Applicant: Koito Manufacturing Co., Ltd., Tokyo 141-0001 (JP)
(72) Inventor: MOCHIZUKI, Yuya, Shizuoka-shi, Shizuoka 424-8764 (JP)
(74) Representative: Cabinet Beau de Loménie
(86) International application number: PCT/JP2023/031725
(87) International publication number: WO 2024/048708

(57) **Abstract**

A piston (13) displaces a nozzle (16) between a first position located outside a support (20) and a second position located inside the support (20) along a first axis (A1) while passing through an opening (21). A cover (11) covers the nozzle (16) as viewed from the outside of the support (20) in a direction along the first axis (A1), and moves with the nozzle (16) along the first axis (A1). A bracket (12) supports the piston (13), and has a first retaining portion (121) retained on an edge portion (22) of the opening (21) from the outside of the support (20). A holder (14) has a second retaining portion (141) facing the first retaining portion (121) from the inside of the support (20) with the edge portion (22) in between. An urging member (15) provides an urging force that urges the second retaining member (141) toward the edge portion (22). A positioning member (17) prevents a pivot motion of at least one of the bracket (12) and holder (14) about a second axis (A2) extending in a direction that is not parallel to the first axis (A1) caused by the urging force.

## Description

### Field

The presently disclosed subject matter relates to a cleaning device adapted to be attached to a support formed with an opening.

### Background

Patent Document 1 discloses a cleaning device adapted to be attached to a support formed with an opening. The cleaning device includes a nozzle, a piston, and a cover. The nozzle is capable of jetting cleaning liquid toward a headlamp at a first position where is located outside the support. The piston displaces the nozzle between the first position and a second position where is located inside the support while passing through the opening. The cover covers the nozzle when viewed from the outside of the support along a first axis, and is movable along the first axis together with the nozzle.

### Citation List

### Patent Document

Patent Document 1: Japanese Patent Publication No. 2016-010504 A

### Summary of the Invention

### Technical Problem

In such a cleaning device as described above, it is demanded to enhance the positioning accuracy of the cover with respect to the support.

### Solution to Problem

An illustrative aspect of the presently disclosed subject matter may provide a cleaning device adapted to be attached to a support having an opening, the cleaning device comprising:
a nozzle configured to jet fluid toward a target from a first position where is located outside the support;
a piston configured to displace the nozzle between the first position and a second position where is located inside the support along a first axis while passing through the opening;
a cover covering the nozzle as viewed from the outside of the support in a direction along the first axis, and configured to move with the nozzle along the first axis;
a bracket supporting the piston, and having a first retaining portion retained on an edge portion of the opening from the outside of the support;
a holder having a second retaining portion facing the first retaining portion from the inside of the support with the edge portion in between;
an urging member providing an urging force that urges the second retaining member toward the edge portion; and
a positioning member configured to prevent a pivot motion of at least one of the bracket and holder about a second axis extending in a direction that is not parallel to the first axis caused by the urging force.

The urging force by the urging member generates a force pivoting the other portions of the cleaning device about the second axis extending in the direction that is not parallel to the first axis. In a case where an unnecessary gap exists between the bracket and the holder due to a component tolerance or an assembly error, such a pivoting force may cause a misalignment in at least one of the bracket and the holder. The bracket supports the piston that supports the nozzle. Since the cover is configured to be movable with the nozzle, the cover may also be misaligned. In this case, not only the appearance of the cleaning device as viewed from the outside of the support is impaired, but also unexpected interference may occur between the cover and the support.

According to the configuration as described above, since the positioning member is provided so as to prevent the pivot motion of at least one of the bracket and the holder about the second axis caused by the urging force of the urging member, it is possible to enhance the positioning accuracy of the cover with respect to the support even if a gap caused by the component tolerance or the assembly error exists between the bracket and the holder. As a result, it is possible to suppress the impairment in the appearance of the cleaning device from the outside of the support and the unexpected interference between the cover and the support. In addition, since the requirements as for the component tolerance and the assembly error are alleviated, the manufacturing yield of the cleaning device is increased.

### Brief Description of Drawings

FIG. 1 illustrates a state that a cleaning device according to one embodiment is attached to a support.
FIG. 2 illustrates a configuration the cleaning device of FIG. 1 in an exploded manner.
FIG. 3 illustrates a vehicle in which the cleaning device of FIG. 1 is to be installed.
FIG. 4 illustrates a cross section viewed from an arrowed direction along a line IV-IV of FIG. 1.
FIG. 5 illustrates a cross section viewed from an arrowed direction along a line V-V of FIG. 4.
FIG. 6 illustrates a cross section viewed from an arrowed direction along a line VI-VI of FIG. 4.
FIG. 7 illustrates a state that a nozzle is placed in a cleaning position.
FIG. 8 illustrates a cleaning device according to a comparative example.
FIG. 9 illustrates an appearance of a cover viewed from the direction of an arrow IX of FIG. 6.
FIG. 10 illustrates another exemplary positioning member.
FIG. 11 illustrates another exemplary positioning member.

### Description of Embodiments

Exemplary embodiments will be described below in detail with reference to the accompanying drawings. In each of the drawings used in the following descriptions, the scale is changed as required in order to make each member have a recognizable size.

In the accompanying drawings, an arrow F represents a forward direction of the illustrated structure. An arrow B represents a rearward direction of the illustrated structure. An arrow U represents an upward direction of the illustrated structure. An arrow D represents a downward direction of the illustrated structure. An arrow R represents a rightward direction of the illustrated structure. An arrow L represents a leftward direction of the illustrated structure. The expression according to these directions is intended to be used for convenience of explanation and is not intended to limit the attitude of the structure at the time of actual use.

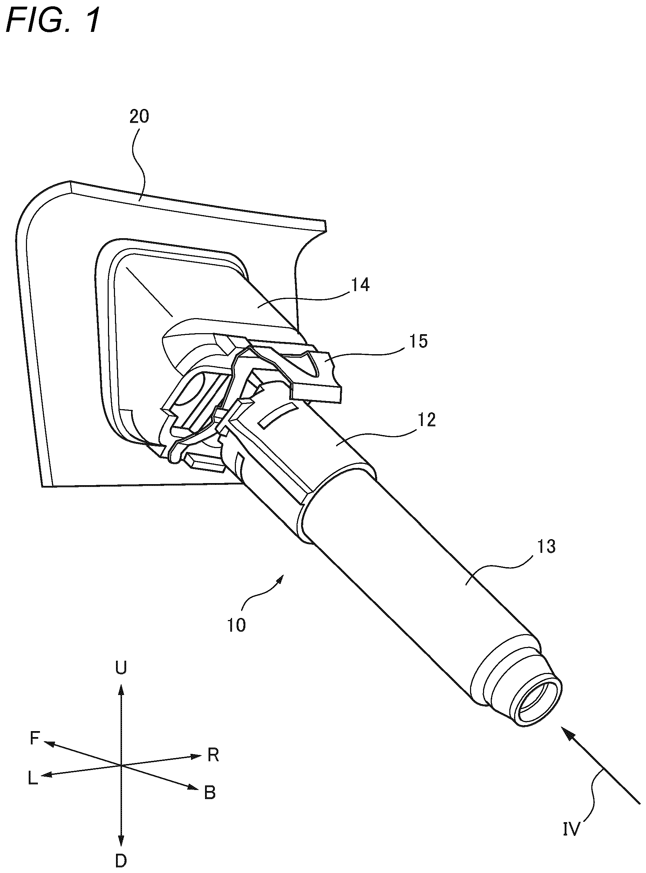

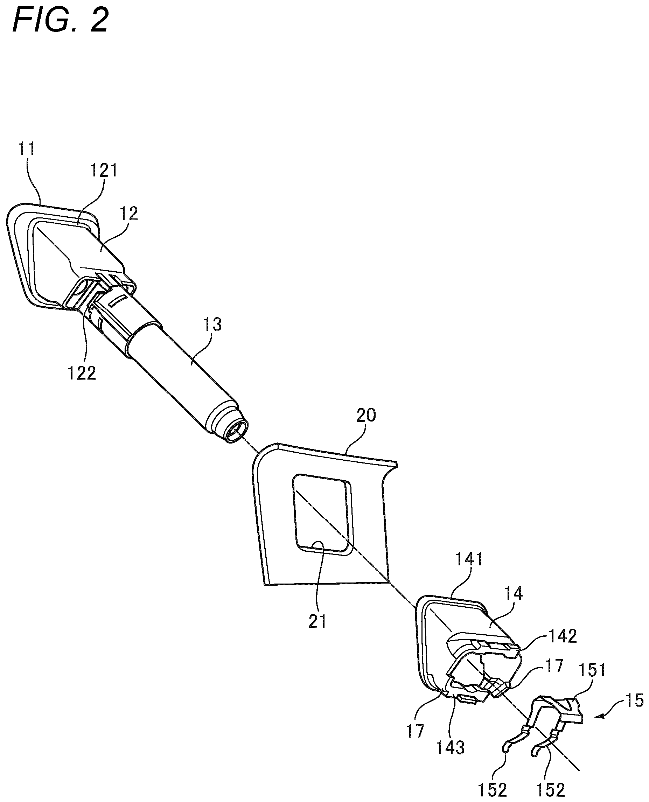

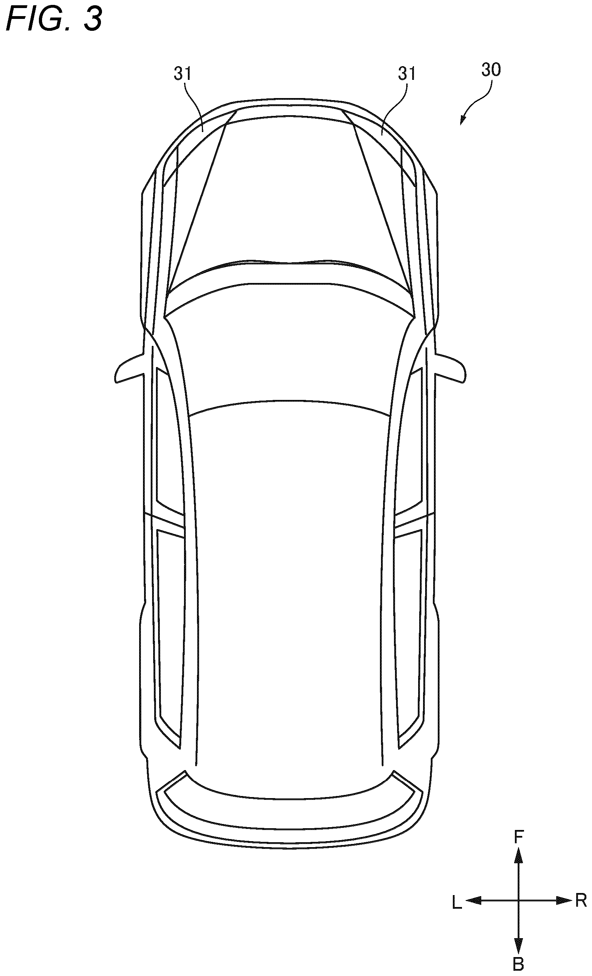

FIG. 1 illustrates an appearance of a cleaning device 10 according to one embodiment. FIG. 2 illustrates principal components of the cleaning device 10 in an exploded manner. The cleaning device 10 is a device adapted to be attached to a support 20 for cleaning a target. In the present embodiment, a translucent cover of a headlamp device 31 adapted to be mounted on a front portion of a vehicle 30 illustrated in FIG. 3 is a target to be cleaned. The support 20 may be a component forming a part of the vehicle 30. The vehicle 30 is an example of a mobility.

As illustrated in FIG. 2, the cleaning device 10 includes a cover 11, a bracket 12, and a piston 13. The cleaning is performed with the cleaning device 10 by jetting cleaning liquid from a nozzle to a lighting device. The nozzle is housed in a space defined by the cover 11 and the bracket 12. The bracket 12 supports the piston 13.

The support 20 is formed with an opening 21. As the piston 13 is caused to pass through the opening 21 from the outside of the support 20, a portion of the bracket 12 also passes through the opening 21 and is disposed inside the support 20 together with the piston 13.

The cleaning device 10 further includes a holder 14. The holder 14 includes a second retaining portion 141. The holder 14 is attached to the bracket 12. At this time, the second retaining portion 141 is disposed so as to face, from the inside of the support 20, a first retaining portion 121 of the bracket 12 with an edge portion 22 in between.

The cleaning device 10 further includes an urging member 15. The urging member 15 is configured to be elastically deformed by being attached between the bracket 12 and the holder 14.

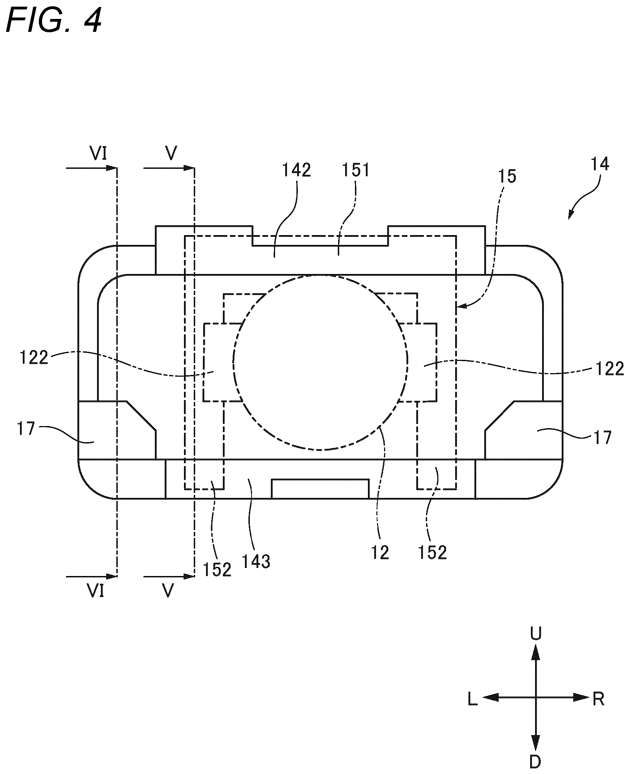

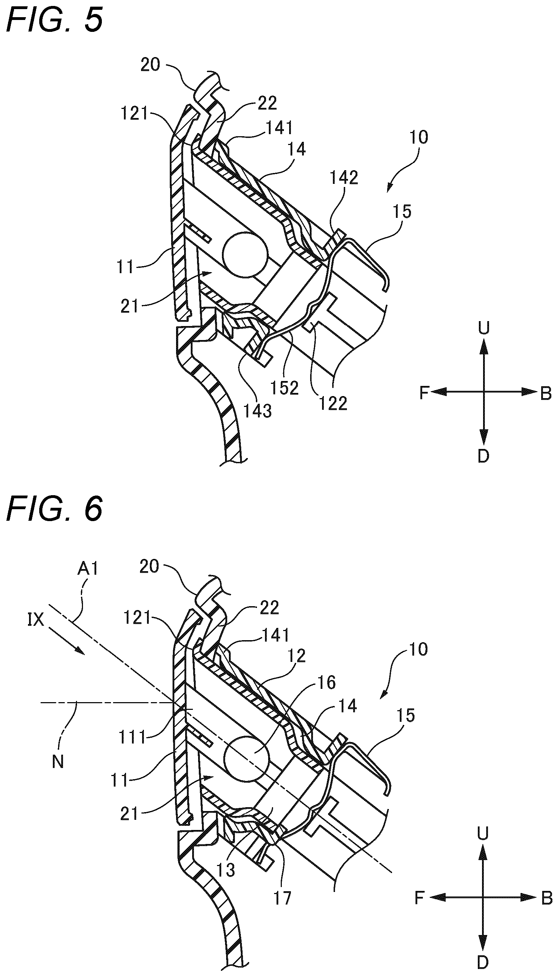

With reference to FIGS. 4 to 6, a structure for fixing the cleaning device 10 to the above-described support 20 will be described in more detail. FIG. 4 schematically illustrates an appearance of the holder 14 as viewed from the direction of an arrow IV in FIG. 1, with the positional relationship with respect to the bracket 12 and the urging member 15. FIG. 5 illustrates a cross section of the holder 14 along a line V-V in FIG. 4 as viewed from an arrowed direction. FIG. 6 illustrates a cross section of the holder 14 along a line VI-VI in FIG. 4 as viewed from an arrowed direction.

As illustrated in FIGS. 5 and 6, the bracket 12 includes the first retaining portion 121. The first retaining portion 121 is disposed outside the support 20 together with the cover 11, and is retained on the edge portion 22 of the opening 21. On the other hand, the holder 14 includes the second retaining portion 141. The second retaining portion 141 is disposed inside the support 20 so as to face the first retaining portion 121 with the edge portion 22 in between.

As illustrated in FIGS. 2 and 4, the urging member 15 includes a base portion 151 and a pair of legs 152. The pair of legs 152 extends downward from both end portions in the left-right direction of the base portion 151. Each leg portion 152 has a curved shape that can be elastically deformed.

As illustrated in FIGS. 4 to 6, the holder 14 includes an upper frame portion 142 and a lower frame portion 143. On the other hand, the bracket 12 includes engaging protrusions 122. The urging member 15 is disposed between the holder 14 and the engaging protrusions 122 such that the base portion 151 abuts against the upper frame portion 142, and a tip end of each leg portion 152 abuts against the lower frame portion 143.

An interval between the engaging protrusion 122 of the bracket 12 and each of the upper frame portion 142 and the lower frame portion 143 of the holder 14 in a direction along the front-rear direction is determined so as to force each leg portion 152 of the urging member 15 to exhibit bending deformation. As a result of the elastic restoration force being generated in each of the legs 152, it is generated an urging force for pressing the second retaining portion 141 of the holder 14 toward the edge portion 22 of the support 20. Accordingly, the support 20 is sandwiched by the bracket 12 and the holder 14, so that the cleaning device 10 is fixed to the support 20.

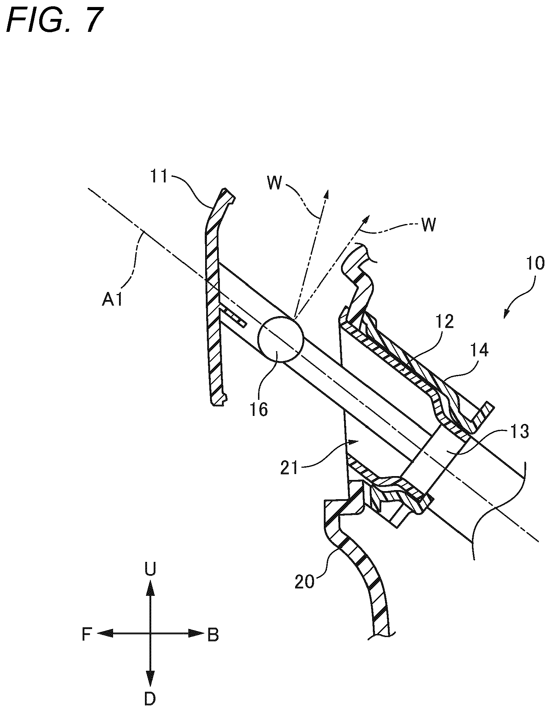

As illustrated in FIG. 6, the cleaning device 10 includes a nozzle 16. The nozzle 16 is capable of jetting cleaning liquid W toward the lighting device at a cleaning position where is located outside the support 20 as illustrated in FIG. 7 (here, illustration of the urging member 15 is omitted). The cleaning liquid W is an example of fluid. The piston 13 is configured to displace the nozzle 16 along a first axis A1 while passing through the opening 21 of the support 20 between a housed position where is located inside the support 20 as illustrated in FIG. 6.

The cover 11 covers the nozzle 16 when viewed from the outside of the support 20 along the first axis A1. The cover 11 is coupled to the nozzle 16 with a coupling portion 111. Accordingly, as illustrated in FIG. 7, the cover 11 is displaced along the first axis A1 together with the nozzle 16.

As illustrated in FIGS. 2, 4, and 6, the cleaning device 10 includes a pair of positioning members 17. In this example, the pair of positioning members 17 is disposed on the left and right of the lower frame portion 143 of the holder 14. As viewed from the direction of the arrow IV in FIG. 1, each positioning member 17 extends so as to overlap with a space defined by the holder 14 for housing a part of the bracket 12.

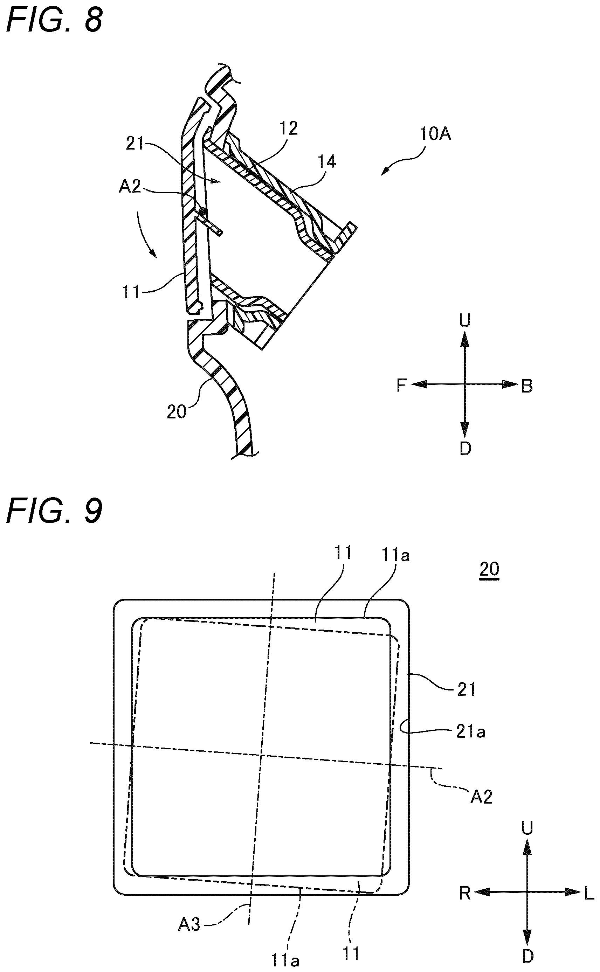

FIG. 8 illustrates a cleaning device 10A according to a comparative example for explaining the function of the positioning member 17. The cleaning device 10A is different from the cleaning device 10 only in that the positioning member 17 is absent. In FIG. 8, the illustration of the piston 13, the urging member 15, and the nozzle 16 is omitted.

The urging force by the urging member 15 generates a force pivoting the other portions of the cleaning device 10 about a second axis A2 extending in a direction that is not parallel to the first axis A1. In a case where an unnecessary gap exists between the bracket 12 and the holder 14 due to a component tolerance or an assembly error, such a pivoting force may cause a misalignment in at least one of the bracket 12 and the holder 14. In FIG. 8, it is illustrated a case where a misalignment occurs in the bracket 12.

As described above, the bracket 12 supports the piston 13 that supports the nozzle 16. The cover 11 is coupled to the piston 13 via the nozzle 16. Therefore, the cover 11 may also be misaligned. In this case, not only the appearance of the cleaning device 10 as viewed from the outside of the support 20 is impaired, but also unexpected interference may occur between the cover 11 and the support 20.

As illustrated in FIG. 6, the positioning member 17 according to the present embodiment is arranged at a position that can prevent the pivot motion of at least one of the bracket 12 and the holder 14 about the second axis A2 caused by the urging force of the urging member 15.

Accordingly, it is possible to enhance the positioning accuracy of the cover 11 with respect to the support 20 even if a gap caused by a component tolerance or an assembly error is present between the bracket 12 and the holder 14. As a result, it is possible to suppress the impairment in the appearance of the cleaning device 10 from the outside of the support 20 and the unexpected interference between the cover 11 and the support 20. In addition, since the requirements as for the component tolerance and the assembly error are alleviated, the manufacturing yield of the cleaning device 10 is increased.

As illustrated in FIG. 6, in the present embodiment, the cleaning device 10 is attached to the support 20 such that the first axis A1 extends in a direction that is not parallel to a normal N of the support 20 at the position where the opening 21 is formed. The pivot about the second axis A2 of at least one of the bracket 12 and the holder 14 caused by the urging force of the urging member 15 described above is more likely to occur in such a configuration. Accordingly, the advantage of the positioning member 17 becomes more remarkable in that configuration.

However, the positioning member 17 may be provided in such a cleaning device 10 that is attached to the support 20 such that the first axis A1 extends in a direction parallel to the normal N.

FIG. 9 illustrates an appearance of the support 20 and the cover 11 as viewed from the direction of an arrow IX in FIG. 6. The regular position of the cover 11 is indicated by solid lines. In other words, an outer edge 11a of the cover 11 is located inside an inner edge 21a of the opening 21. The distance between the outer edge 11a and the inner edge 21a is kept uniform.

On the other hand, the position of the cover 11 when the above-described misalignment occurs is indicated by dashed chain lines. In the example of FIG. 8, the second axis A2, that is the pivot center of the bracket 12, extends in a direction along the left-right direction of the cleaning device 10. Additionally or alternatively, the urging force generated by the urging member 15 may cause a pivot motion about a third axis A3 extending in a direction along the up-down direction of the cleaning device 10. The third axis A3 also extends in a direction that is not parallel to the first axis A1. In a case where such a misalignment of the cover 11 occurs, not only the appearance of the cleaning device 10 as viewed from the outside of the support 20 is impaired, but also unexpected interference may occur between the outer edge 11a of the cover 11 and the inner edge 21a of the opening 21 when the cover 11 is displaced in accordance with the advancing and retracting of the nozzle 16.

The positioning member 17 is disposed at a position that can prevent at least one of the bracket 12 and the holder 14 from pivoting about at least one of the second axis A2 and the third axis A3 caused by the urging force of the urging member 15.

Accordingly, even if a gap caused by a component tolerance or an assembly error exists between the bracket 12 and the holder 14, it is possible to suppress the misalignment of the outer edge 11a of the cover 11 with respect to the inner edge 21a of the opening 21. As a result, it is possible to suppress the impairment in the appearance of the cleaning device 10 from the outside of the support 20 and an unexpected interference between the outer edge 11a of the cover 11 and the inner edge 21a of the opening 21 in accordance with the advancing and retracting of the nozzle 16.

In the present embodiment, the positioning member 17 and the holder 14 are parts of a one-piece molded article. In this case, not only it is possible to reduce the number of components and the number of assembling steps, but also it is easy to secure the rigidity of the positioning member 17 for preventing unnecessary pivot motion of at least one of the bracket 12 and the holder 14 caused by the urging force of the urging member 15.

However, separate positioning members 17 may be provided and attached to the holder 14. In this case, it is possible to alleviate the constraint as for the design of a mold for molding the holder 14.

As long as it is possible to prevent at least one of the bracket 12 and the holder 14 from pivoting about the second axis A2 caused by the urging force of the urging member 15, it is not necessary to provide the positioning member 17 on the holder 14.

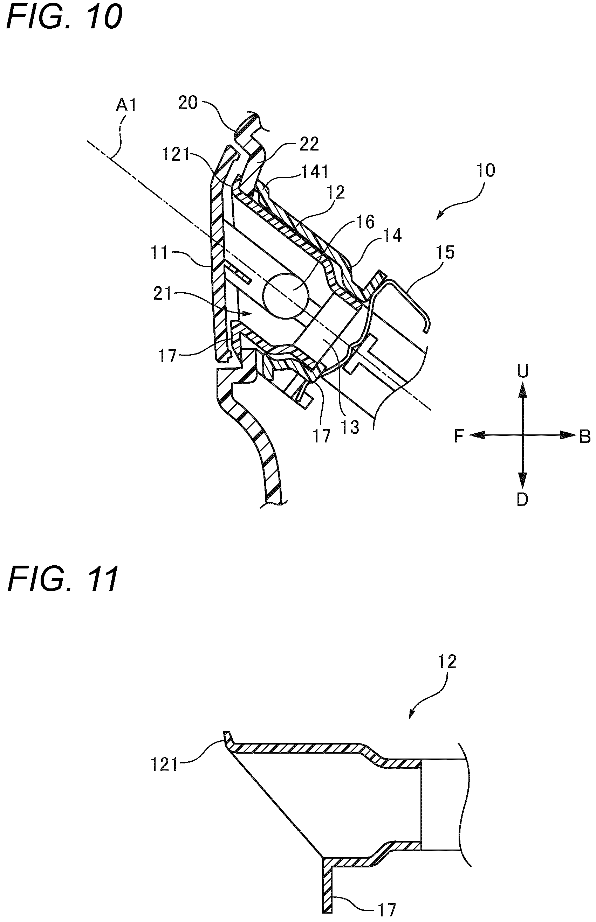

In addition to or instead of the positioning member 17 provided on the holder 14, as illustrated in FIG. 10, the positioning member 17 may be provided on the bracket 12. Specifically, the positioning member 17 may be provided so as to be retained on the edge portion 22 of the opening 21 from the outside of the support 20. In this case, the positioning member 17 may be provided as a one-piece molded article with the bracket 12, or may be provided as a separate component adapted to be attached to the bracket 12.

The shape of the positioning member 17 provided on the bracket 12 is not limited to the one illustrated in FIG. 10. The shape of the positioning member 17 capable of preventing the pivot motion of the bracket 12 may also be appropriately changed in accordance with the angle formed by the first axis A1 and the normal N. FIG. 11 illustrates another exemplary shape of the positioning member 17 provided on the bracket 12.

The various configurations described above are merely examples for facilitating an understanding of the presently disclosed subject matter. Each exemplary configuration may be appropriately modified or combined with another configuration within the scope of the presently disclosed subject matter.

The target to be cleaned by the cleaning device 10 is not limited to the translucent cover of the headlamp device 31. Examples of other targets include a sensing surface of a sensor that detects information around the vehicle 30 using light, or a surface of a member allowing light to pass through.

For cleaning the target, liquid such as water or gas such as air may be used. The liquid or gas is an example of the fluid.

The cleaning device 10 may be installed in a mobility other than the vehicle. Examples of other mobilities include an aircraft, a flying object, a ship, and the like. The mobility may not require a driver.

The cleaning device 10 may not be installed in the mobility. For example, the cleaning device 10 may be installed in a house, a facility, a transportation infrastructure, or the like and used for cleaning a target as exemplified above.

The present application is based on Japanese Patent Application No. 2022-137957 filed on August 31, 2022, the entire contents of which are incorporated herein by reference.

## Claims

1. A cleaning device adapted to be attached to a support formed with an opening, the cleaning device comprising:
a nozzle configured to jet fluid toward a target from a first position where is located outside the support;
a piston configured to displace the nozzle between the first position and a second position where is located inside the support along a first axis while passing through the opening;
a cover covering the nozzle as viewed from the outside of the support in a direction along the first axis, and configured to move with the nozzle along the first axis;
a bracket supporting the piston, and having a first retaining portion retained on an edge portion of the opening from the outside of the support;
a holder having a second retaining portion facing the first retaining portion from the inside of the support with the edge portion in between;
an urging member providing an urging force that urges the second retaining member toward the edge portion; and
a positioning member configured to prevent a pivot motion of at least one of the bracket and holder about a second axis extending in a direction that is not parallel to the first axis caused by the urging force.

2. The cleaning device according to claim 1, adapted to be attached to the support such that the first axis extends in a direction that is not parallel to a normal of the support at a position where the opening is formed.

3. The cleaning device according to claim 1 or 2,
wherein an outer edge of the cover is located inside an inner edge of the opening.

4. The cleaning device according to any one of claims 1 to 3,
wherein the positioning member and the holder are parts of a one-piece molded article.

5. The cleaning device according to any one of claims 1 to 4,
wherein the support is a part of a mobility.

6. The cleaning device according to any one of claims 1 to 5,
wherein the target is a part of a lighting device.
